# EUROPEAN PATENT SPECIFICATION

(11) **EP 4 577 434 B1**
(45) Date of publication and mention of the grant of the patent: **19.08.2026**
(21) Application number: 23764244.2
(22) Date of filing: 23.08.2023
(51) Int. Cl.: B60T 8/1761, B60T 8/17, B60T 8/32, B60T 8/36, B60T 13/68

(54) **TRAILER BRAKE CONTROL SYSTEM**
ANHÄNGERBREMSSTEUERSYSTEM
SYSTÈME DE COMMANDE DE FREIN DE REMORQUE

(30) Priority: 23.08.2022 GB 202212220
(43) Date of publication of application: 02.07.2025
(73) Proprietor: KNORR-BREMSE Systeme für Nutzfahrzeuge GmbH, 80809 München (DE)
(72) Inventor: BIRKAS, Balazs Viktor, 1115 Budapest (HU); KONCZ, Laszlo, 6000 Kecskemet (HU); NAGY, Tibor, 5502 Gyomaendrod (HU)
(86) International application number: PCT/EP2023/073176
(87) International publication number: WO 2024/042140

(56) References cited:
- US-A1- 2001 033 105
- US-A1- 2005 137 767
- US-A1- 2006 152 075
- US-B1- 6 371 573

## Description

The invention relates to a trailer anti lock brake control system.

Anti-lock brakes (ABS) are a well known feature of trailer braking systems. In a typical ABS system, the trailer is provided with wheel speed sensors on, for example, four wheels of the trailer. The output of the wheel speed sensors is monitored by the ABS controller and in the event that it appears that one of the wheels is rotating more slowly than the other wheels, the ABS controller will reduce the brake pressure at that wheel until the wheel speed increases to match that of the other wheels. The wheel speed will reduce when for example, the wheel is starting to lock or if it is skidding due to traction problems that may occur on surfaces such as gravel or ice. In the opposite case that a wheel is detected that is rotating too quickly, the ABS controller will increase the pressure until the wheel speed of that wheel matches the other wheels. GB2284458 discloses an early trailer ABS system that focusses on road trains.

Existing trailer brake system valve arrangements are known from, for example, WO03011664 which discloses brakes of the front axle of the trailer of a utility vehicle are impinged upon with a brake pressure by way of a single, common ABS valve. Said ABS valve is electrically actuated by an EBS module associated with the rear wheel brakes depending on a differential slip between the front axle and the rear axle.

US6371573 discloses a braking system for a wheeled vehicle with a pressurized air source, an air actuated wheel braking device, an electronic control which responds to vehicle speed and wheel speed to selectively invoke an antilock mode of braking. A control valve responds to the electronic control and operator control to selectively control the supply of air from the source to the braking device. In the antilock mode, the control valve is initially enabled to release braking pressure and thereafter alternately enabled and disabled to maintain braking pressure at a substantially constant reduced pressure, and subsequently alternately enabled and disabled at a reduced ratio of enabled duration to disabled duration to rebuild braking pressure.

Further similar braking systems are disclosed in US2001/033105, US2005/137767 and US2006/152075.

Such systems have proven themselves in practice but there is constant cost pressure on the ABS supplier by trailer builders.

The present invention therefore seeks to provide a simpler ABS system that can provide equivalent to or better performance than the known ABS systems on trailers.

According to the invention there is provided a brake system for a trailer or agricultural vehicle in accordance with the features of Claim 1

Preferably, a choke is provided to control pressure to the control chamber. Preferably, wherein the control chamber has a pilot connection, pressure in the control chamber being controllable in and out through the throttle or during continuous throttle supply can be overridden by solenoid.

Preferably, the solenoid is located between the pilot connection and the exhaust.

The solution of the invention implements an ABS solution using a single 2/2 solenoid and is hence significantly lower cost than the known trailer ABS solutions.

The approach enables a simpler trailer ABS, with fewer parts, so the production will be simpler, less material is needed, thereby reducing production costs and with streamlined solution there are fewer possible operational errors. As a result the size of ABS module valve is reduced, which advantageously saves space on the trailer.

Exemplary embodiments of the invention will now be described in greater detail with reference to the drawings in which:
Fig. 1 shows a known trailer electronic braking system;
Fig. 2 shows a valve arrangement in accordance with the invention;
Fig. 3 shows the valve of Fig. 2 in a trailer brake system.

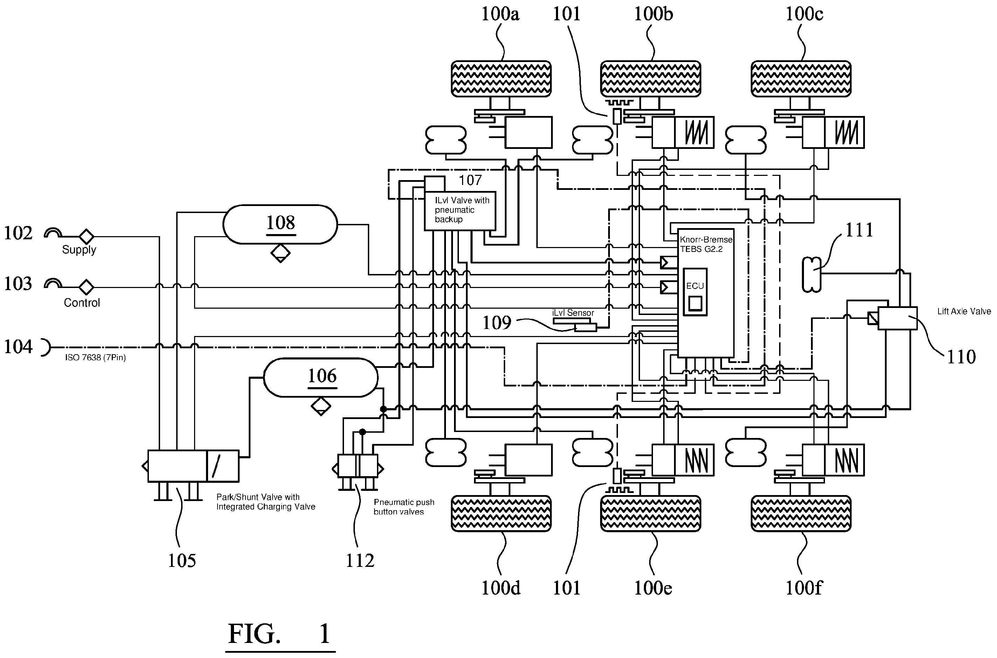

Figure 1 shows a known trailer braking system with levelling control and lift axle control. A conventional utility vehicle trailer has a steerable front axle with front wheels and three rear axles with rear wheels 100a-f. Rotational wheel speed sensors 101 are in each case assigned to the left wheels and the right wheels and are connected by way of electric lines with an electropneumatic brake pressure control module which is primarily assigned to the rear axle brakes. One brake is in each case assigned to the left wheels and to the right wheels, which brakes can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7.

The supply line connection is connected by way of a park shunt valve 105 with an air brake reservoir 106. From the air brake reservoir, a pneumatic line leads to a supply input of the pressure control module/ECU. The pressure control module is provided with an integral electronic control unit.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the levelling control.

To provide stability control a lateral acceleration sensor is provided, which may also be integrated with a yaw sensor, and the output of the lateral acceleration sensor is fed to the pressure control module/ECU. Typically the lateral acceleration sensor is integrated into the pressure control module/ECU. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

To provide levelling control, a levelling control valve 107 is provided. Due to the additional air use required in levelling control a second reservoir 108 connected to the supply is provided, which is pneumatically connected to the levelling control valve 107. The levelling control valve is further pneumatically connected to each of the air bags and controls the flow of air into and exhaust of air from the air bags.

The levelling control valve is provided with pneumatic control inputs from push buttons on a push button valve 112, the air for which is supplied by the reservoir 106. Further electrical and pneumatic control is provided from the pressure control module/electronic control unit. A levelling sensor 109 to determine the height of the trailer is electrically connected to the pressure control module/ECU.

A lift axle control valve 110 is provided, which is supplied with air from the additional reservoir and has a further pneumatic connection with the levelling control valve and a further airbag 111. An electrical connection to the pressure control module/ECU provides the control for the lift axle solenoid.

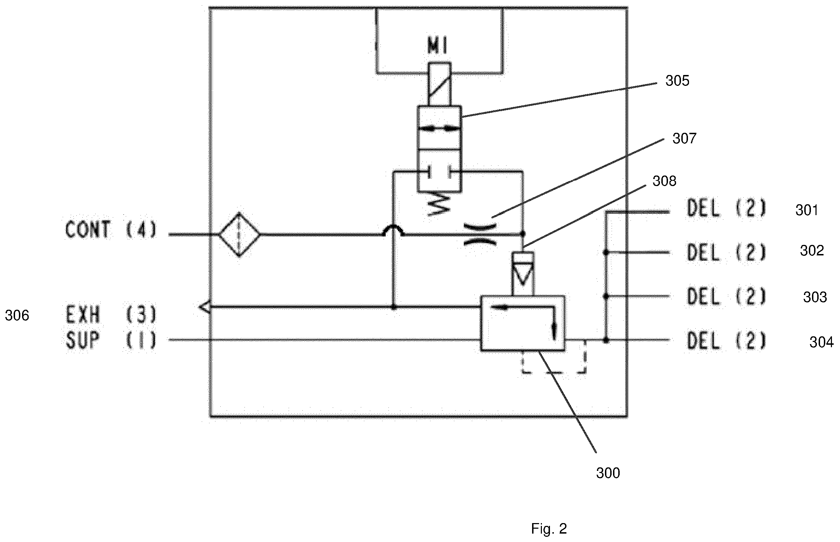

Figure 2 shows an arrangement of valves for use in an ABS trailer brake system, which comprises a relay valve 300, the output of which is connected to four delivery ports 301-304, which allow brake pressure to be applied or released from the trailer wheels. The relay valve 300 is piloted by a solenoid 305. The solenoid 305 is a 2/2 solenoid and is connected to the exhaust 306 of the relay valve as well as the pilot connection 308. The control pressure 4 is connected via throttle 307 to the pilot connection between the outlet of the solenoid 305 and the pilot connection 308. The relay valve is also connected to the supply pressure corresponding to that shown in Figures 1 and 2.

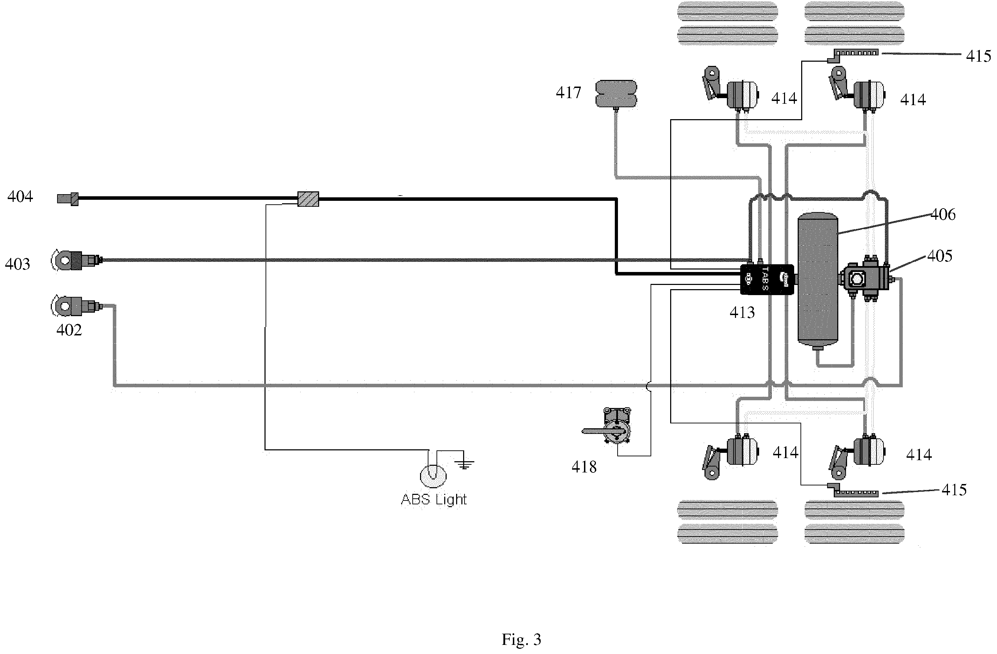

In the position shown in Figure 3, pressure to the pilot connection is from the control supply 4 via the throttle 307. However, should the solenoid 305 be energised, the valve adopts the position that there is a direct connection to the exhaust 306 from the pilot connection, which also remains connected to the control pressure. This will cause a reduction in pressure at the pilot connection as the pressure from the control supply will exhaust rather than increase the pressure.

In the event that the ABS controller detects a wheel speed falling outside an acceptable range, the solenoid 305 can be actuated moving from the position shown in Figure 3 to the second position in which the pilot connection/control chamber has a direct fluid connection to the exhaust port. The reduction in pressure in the control chamber reduces the brake pressure to be applied by the relay valve. The solenoid 305 can be actuated in such a manner until the wheel speed detected in the first step falls within an acceptable range compared to the outputs of the wheel speed sensors for other wheels.

Figure 3 shows schematically the valve of Figure 2 in a trailer brake system, in this case for a dual axle trailer for illustration purposes. As with Figure 1, the braking system of the trailer vehicle is connected by way of three connections, specifically a pneumatic supply line connection 402, a pneumatic control line connection 403 and an electric control connection 404, with the braking system of a tractor or a further trailer. The electric control line is a seven pin ISO 7638 connection.

The supply line connection 402 is connected by way of a park valve 405 with an air brake reservoir 406. The air brake reservoir is pneumatically connected to a supply input of the brake module 413. The brake module comprises a pressure control module with an integral electronic control unit. The brake module 413 is supplied with the control line pressure and can receive electrical control signals from the electrical control connection 404.

Braking devices 414 are located at each wheel end and pneumatically connected to both the park valve 405 and brake module 413. Each wheel on the rear axle of the trailer is provided with a respective wheel speed sensor 415. The system can be characterised as a 2S/1M brake system. The brake module 413 can also receive inputs from an air bellow 417 if the trailer has air suspension or from a load sensor 418 if the trailer has spring suspension. Both are shown for illustration but only one would be installed. Although specifically described as being suitable for a trailer vehicle, the solution of the invention could also be implemented in an agricultural vehicle.

## Claims

1. A brake system for a trailer or agricultural vehicle, the brake system comprising a braking device capable of generating a braking force on a wheel or wheels on the trailer or agricultural vehicle, a braking ECU, the braking force being controllable by the braking ECU, which braking ECU is adapted to receive data inputs from sensors (101) on the trailer or agricultural vehicle and control a first pressure modulator, which pressure modulator comprises a relay valve (300), which relay valve (300) is pneumatically connected to a main brake pressure supply (102) and an exhaust and is further adapted to apply or modulate the braking force to the wheel or wheels (100a-f), wherein the relay valve (300) has a control chamber, which control chamber receives a control pressure, **characterised in that** pressure in the control chamber is controllable by a single 2/2 solenoid valve (305), the solenoid valve (305) being switchable between a first position in which the control chamber is pressurised by the control pressure and a second position, in which the control chamber is connected to the exhaust, the braking ECU being operable to actuate the solenoid (305) between the first and second positions to thereby provide ABS functionality.

2. A brake system according to Claim 1, wherein a choke (307) is provided to control pressure to the control chamber.

3. A brake system according to Claim 1 or Claim 2, wherein the control chamber has a pilot connection, pressure in the control chamber being controllable in and out through the throttle (307) or during continuous throttle supply can be overridden by the solenoid (305).

4. A brake system according to any one of Claims 1 to 3, wherein the solenoid (305) is located between the pilot connection and the exhaust.

## Patentansprüche

1. Bremssystem für einen Anhänger oder ein landwirtschaftliches Fahrzeug, das Bremssystem umfassend eine Bremsvorrichtung, die zum Erzeugen einer Bremskraft an einem Rad oder Rädern am Anhänger oder landwirtschaftlichen Fahrzeug imstande ist, eine Brems-ECU, wobei die Brems-ECU angepasst ist, um Dateneingänge von Sensoren (101) am Anhänger oder landwirtschaftlichen Fahrzeug zu empfangen und einen ersten Druckmodulator zu steuern, wobei der Druckmodulator ein Relaisventil (300) umfasst, wobei das Relaisventil (300) pneumatisch mit einer Hauptbremsdruckversorgung (102) und einem Auslass verbunden ist und weiter angepasst ist, um die Bremskraft an dem Rad oder den Rädern (100a-f) anzulegen oder zu modulieren, wobei das Relaisventil (300) eine Steuerkammer aufweist, wobei die Steuerkammer einen Steuerdruck empfängt, **dadurch gekennzeichnet, dass** der Druck in der Steuerkammer durch ein einzelnes 2/2 Magnetventil (305) steuerbar ist, wobei das Magnetventil (305) zwischen einer ersten Position, in der die Steuerkammer durch den Steuerdruck unter Druck gesetzt wird, und einer zweiten Position, in der die Steuerkammer mit dem Auslass verbunden ist, umschaltbar ist, wobei die Brems-ECU betreibbar ist, um das Magnetventil (305) zwischen der ersten und zweiten Position zu betätigen, um dadurch die ABS-Funktionalität bereitzustellen.

2. Bremssystem nach Anspruch 1, wobei eine Drossel (307) bereitgestellt ist, um Druck für die Steuerkammer zu steuern.

3. Bremssystem nach Anspruch 1 oder Anspruch 2, wobei die Steuerkammer eine Pilotverbindung aufweist, Druck in der Steuerkammer durch die Drossel (307) hinein und heraus steuerbar ist oder bei kontinuierlicher Drosselversorgung durch das Magnetventil (305) außer Kraft gesetzt werden kann.

4. Bremssystem nach einem der Ansprüche 1 bis 3, wobei sich das Magnetventil (305) zwischen der Pilotverbindung und dem Auslass befindet.

## Revendications

1. Système de freinage pour remorque ou véhicule agricole, le système de freinage comprenant un dispositif de freinage capable de générer une force de freinage sur une ou plusieurs roues de la remorque ou du véhicule agricole, un calculateur de freinage (ECU) contrôlant la force de freinage, ledit calculateur est conçu pour recevoir des données provenant de capteurs (101) situés sur la remorque ou le véhicule agricole et pour commander un premier modulateur de pression, ledit modulateur de pression comprend une vanne relais (300), elle-même reliée pneumatiquement à une alimentation principale de freinage (102) et à un échappement, ladite vanne relais (300) est en outre conçue pour appliquer ou moduler la force de freinage sur la ou les roues (100a-f), dans lequel la vanne relais possède une chambre de commande recevant une pression de commande, **caractérisée par le fait que** la pression dans la chambre de commande peut être commandée par une seule électrovanne 2/2 (305), l'électrovanne (305) étant commutable entre une première position dans laquelle la chambre de commande est pressurisée par la pression de commande et une deuxième position, dans laquelle la chambre de commande est connectée à l'échappement, l'ECU de freinage étant capable d'actionner l'électrovanne (305) entre la première et la deuxième position pour assurer ainsi la fonctionnalité ABS.

2. Système de freinage selon la revendication 1, dans lequel un étrangleur (307) est prévu pour commander la pression dans la chambre de commande.

3. Système de freinage selon la revendication 1 ou la revendication 2, dans lequel la chambre de commande comporte une connexion pilote, la pression dans la chambre de commande étant contrôlable à l'entrée et à la sortie par l'intermédiaire de l'accélérateur (307) ou pendant une alimentation continue de l'accélérateur et pouvant être contournée par l'électrovanne (305).

4. Système de freinage selon l'une quelconque des revendications 1 à 3, dans lequel l'électrovanne (305) est située entre la connexion pilote et l'échappement.
